# EUROPÄISCHE PATENTSCHRIFT

(11) **EP 0 689 556 B1**
(45) Veröffentlichungstag und Bekanntmachung des Hinweises auf die Patenterteilung: **20.05.1998**
(21) Anmeldenummer: 94910397.2
(22) Anmeldetag: 09.03.1994
(51) Int. Cl.: C08G 18/36, C08G 18/48, C09D 175/04

(54) **POLYOL FÜR EIN ISOCYANAT-GIESSHARZ UND BESCHICHTUNGEN**
POLYOL FOR AN ISOCYANATE CASTING RESIN AND COATINGS
POLYOL POUR RESINE DE COULEE EN ISOCYANATE ET REVETEMENTS

(30) Priorität: 15.03.1993 DE 4308097
(43) Veröffentlichungstag der Anmeldung: 03.01.1996
(73) Patentinhaber: Henkel Kommanditgesellschaft auf Aktien, 40191 Düsseldorf (DE)
(72) Erfinder: DAUTE, Peter, D-45127 Essen (DE); GRÜTZMACHER, Roland, D-42489 Wülfrath (DE); KLEIN, Johann, D-40233 Düsseldorf (DE); HÖFER, Rainer, D-40477 Düsseldorf (DE); DÖBRICH, Peter, D-40211 Düsseldorf (DE); BEUER, Bernd, D-40789 Monheim (DE)
(86) Internationale Anmeldenummer: EP9400715
(87) Internationale Veröffentlichungsnummer: WO9421702

(56) Entgegenhaltungen:
- EP-A- 0 152 585
- EP-A- 0 259 722
- EP-A- 0 260 499
- DE-A- 1 645 573
- FR-A- 1 281 243
- FR-A- 1 434 802

## Beschreibung

Die Erfindung betrifft die Verwendung eines Polyols zur Herstellung eines Isocyanat-Gießharzes.

In der DE 36 20 422 werden Polyole beschrieben, die durch Ringöffnung epoxidierter, aus natürlichen Fetten und Ölen stammender Fettsäureester von mehrwertigen Alkoholen mit aliphatischen Hydroxyverbindungen der Funktionalität 1 bis 10 herstellbar sind. Sie eignen sich zur Herstellung wäßriger Polyurethan-Dispersionen.

In der DE 41 22 530 wird die Herstellung von Fettsäureniedrigalkylestern aus Fettsäureglyceriden und niederen aliphatischen Alkoholen beschrieben. Die Produkte zeichnen sich durch einen geringen Gehalt an gebundenem Glycerin und eine niedrige Säurezahl aus. Von einer Epoxidierung ist keine Rede.

Aus der EP 152 585 A ist eine Zusammensetzung bekannt, die A) aus einer Isocyanat-Verbindung der Funktionalität 2 bis 10 und B) einem im wesentlichen wasserfreien Polyol besteht, welches mehr als 10 C-Atome und 2 oder mehr Hydroxylgruppen enthält und welches durch Umsetzung von epoxidierten Fettalkoholen, Fettsäureestern oder Fettsäureamiden mit aliphatischen oder aromatischen Alkoholen der Funktionalität 1 bis 10 und/oder mit di- oder trifunktionellen Phenolen unter Epoxidringöffnung und gewünschtenfalls Umesterung der Fettsäureester und/oder nachfolgender Reaktion mit C₂-C₄-Epoxiden hergestellt worden ist. Beide Komponenten können bis zu ihrer Verwendung getrennt gelagert werden. Zumindest eine der beiden Komponenten kann weitere Zusätze wie Lösungsmittel, Beschleuniger, Füllstoffe oder Hilfsmittel enthalten. Nachteilig bei den Polyesterpolyolen ist die geringe Beständigkeit der ausgehärteten Polyurethanmassen gegen Chemikalien, insbesondere starke Laugen.

Aus der DE 40 41 119 A ist die Verwendung von mehrfunktionellen nicht-verseifbaren Alkoholen als Zusatz zu Polyolkomponenten bei der Herstellung von Polyurethanen bekannt. Die Alkohole werden hergestellt durch ringöffnende Umsetzung epoxidierter Olefine und/oder epoxidierter Alkohole mit niedermolekularen Di- und/oder Triolen. Der Zusatz dient dazu, die Hydrolysestabilität des Polyurethans zu verbessern.

In beiden Dokumenten wurde das Polyurethanharz als Klebstoff verwendet. Von einer Verwendung als Gießharz oder Beschichtung ist keine Rede. Unter "Beschichten" wird das Aufbringen einer fest haftenden Schicht aus einem formlosen Stoff auf einem Werkstück oder einer Trägerbahn verstanden.

FR-A-1434802 beschreibt die Herstellung von Polyolen hergestellt durch Umsetzung von epoxidierten Fettsäureestern mit Diolen und deren Verwendung bei der Herstellung von Formmassen und Beschichtungen.

FR-A-1281243 beschreibt die Herstellung von Polyolen durch Umsetzung von epoxidierten Fettsäureerstern mit Alkoholen und deren Verwendung als Isocyanat-Gießharze und Beschichtungsmassen.

EP-A-259722 beschreibt ein Verfahren zur Herstellung massiver Polyurethanwerkstoffe in Gießverfahren. Die Polyole werden durch die Umsetzung von epoxidierten Triglyceridölen mit einertigen Alkoholen hergestellt. Diese Additionsprodukte können auch anschließend mit C₂₋₄- Alkylenoxiden umgesetzt werden. Die Polyole werden mit Isocyanaten gemischt, um ein Isocyanat-Gießharz bereitzustellen.

Gießharze sind bekanntlich flüssige oder durch mäßige Erwärmung verflüssigbare synthetische Harze, die in offene Formen gegossen werden und dort erhärten. Zu den Gießharzen zählen auch Isocyanat-Gießharze. Darunter werden nach DIN 55958 Kunstharze verstanden, die auf aliphatischen, cycloaliphatischen oder aromatischen Isocyanaten basieren und noch freie Isocyanat-Endgruppen enthalten. Ihre Aushärtung kann unter verschiedenen Bedingungen erfolgen. So besteht z.B. ein einkomponentiges Gießharz aus einem Polyurethanprepolymeren mit endständigen freien oder blockierten Isocyanat-Gruppen, die bei Feuchtigkeitseinwirkung aushärten, wobei eine Erwärmung erfolgen kann, um z.B. die Reaktion zu beschleunigen oder die Festigkeit zu erhöhen. Ein zweikomponentiges Gießharz basiert z.B. auf Polyhydroxyverbindungen auf Basis von verzweigten Polyestern oder Polyethern als erste Komponente und auf Polyisocyanat als zweiter Komponente. Nach dem Mischen beider Komponenten härten sie bei Raumtemperatur oder leicht erhöhter Temperatur aus. Derartige zweikomponentige Gießharze werden z.B. für den Verguß von Kabelarmaturen verwendet.

In beiden obigen Fällen ist der direkte Kontakt mit feuchtem Material, insbesondere mit flüssigem Wasser zu vermeiden. Dann entsteht nämlich in einer Konkurrenzreaktion CO₂. Die CO₂-Bildung führt in der Regel zu Blasen und zu einer verringerten Festigkeit.

Es bestand daher der Bedarf nach einem Isocyanat-Gießharz bzw. Beschichtungsmasse, welche gegenüber Feuchtigkeit und Chemikalien weitgehend unempfindlich sind, so daß bei der Herstellung eine Blasenbildung vermieden wird und beim Gebrauch der ausgehärteten Formkörper eine Beständigkeit über relativ langen Zeitraum erhalten wird.

Die erfindungsgemäße Lösung ist den Patentansprüchen zu entnehmen. Sie besteht im wesentlichen in der Verwendung der Polyole gemäß der EP 152 585, die auf Fettsäureestern basieren, zur Herstellung eines IsocyanatGießharzes bzw. einer Beschichtungsmasse.

Die Erfindung besteht also in der Verwendung eines Polyols mit mehr als 10 C-Atomen und 2 oder mehr Hydroxylgruppen für ein Isocyanat-Gießharz bzw. für eine Beschichtungsmasse, wobei das Polyol durch Umsetzung von Fettsäureestern mit aliphatischen oder aromatischen Alkoholen der Funktionalität 1, insbesondere 2 bis 10 und/oder mit di- oder trifunktionellen Phenolen unter Epoxidringöffnung und gewünschtenfalls Umesterung der Fettsäureester und/oder nachfolgender Reaktion mit C₂- bis C₄-Epoxiden hergestellt worden ist.

Eine bevorzugte Gruppe von Polyolen für Zweikomponenten-Gießharze im Sinne der Erfindung sind die Ringöffnungsprodukte epoxidierter Fettsäureester mit aliphatischen Alkoholen der Funktionalität 1, insbesondere 2 bis 10. Eine Untergruppe dieser Verbindungen sind die Ringöffnungsprodukte epoxidierter Fettsäureester, insbesondere Triglyceride, also epoxidierter Fettsäureglycerinester, bei denen die Ringöffnung unter Erhalt der Esterbindung ausgeführt worden ist. Derartige Verbindungen sind besonders leicht zugänglich und in großer Variationsbreite herstellbar. Zur Herstellung der Ringöffnungsprodukte kann man von einer Vielzahl epoxidierter Triglyceride pflanzlichen oder tierischen Ursprungs ausgehen. Voraussetzung ist lediglich, daß ein substantieller Anteil an Epoxidgruppen vorhanden ist. So sind beispielsweise epoxidierte Triglyceride geeignet, die 2 bis 10 Gewichtsprozent Epoxidsauerstoff aufweisen. Für manche Einsatzzwecke besonders geeignet sind hier Produkte mit einem Epoxidsauerstoffgehalt von 3 bis 5. Dieser kann eingestellt werden, indem von Triglyceriden mit relativ niederer Jodzahl ausgegangen wird und diese erschöpfend epoxidiert werden oder indem von Triglyceriden mit hoher Jodzahl ausgegangen wird und nur teilweise Umsetzung zu Epoxiden erfolgt. Eine weitere, für andere Einsatzzwecke geeignete Produktgruppe geht von epoxidierten Triglyceriden mi Epoxidsauerstoffgehalt von 4 bis 8,5 % aus. Derartige Produkte sind herstellbar aus den folgenden Fetten, Ölen (geordnet nach steigender Ausgangsjodzahl) : Rindertalg, Palmöl, Schmalz, Rizinusöl, Erdnußöl, Rüböl sowie bevorzugt Baumwollsaatöl, Sojabohnenöl, Tranöl, Sonnenblumenöl, Leinöl. Besonders bevorzugte Rohstoffe sind epoxidiertes Sojabohnenöl mit Epoxidzahl 5,8 bis 6,5, epoxidiertes Sonnenblumenöl mit Epoxidzahl 5,6 bis 6,6, epoxidiertes Leinöl mit Epoxidzahl 8,2 bis 8,6 sowie epoxidiertes Tranöl mit Epoxidzahl 6,3 bis 6,7.

Zur Darstellung erfindungsgemäß geeigneter Polyole können die epoxidierten Triglyceride der vollständigen Ringöffnung mit mehrfunktionellen Alkoholen oder auch der teilweisen Ringöffnung unterzogen werden. Bei der teilweisen Ringöffnung entstehen modifizierte Triglyceride mit im Mittel Epoxid- und Hydroxyl- sowie Ethergruppen. Die Herstellung derartiger Produkte ist Gegenstand der älteren deutschen Patentanmeldung P 32 46 612.9. Danach werden Triglyceride eines wenigstens anteilsweise olefinisch ungesättigte Fettsäuren enthaltenden Fettsäuregemische mit ein- oder mehrwertigen Alkoholen in Gegenwart von Katalysatoren zur Herstellung von Triglyceridreaktionsprodukten der partiellen Ringöffnung unterworfen, indem die Reaktion durch Zerstören oder Entfernen des Katalysators und/oder des Alkoholreaktanten nach einem Umsatz von 20 bis 80 Mol-%, bezogen auf Epoxidgruppen, abgebrochen wird.

Die vollständige oder teilweise Ringöffnung der epoxidierten Triglyceride mit Hydroxyverbindungen der Funktionalität 2 bis 10 kann nach dem bei den epoxidierten Fettalkoholen bekannten Verfahren (s. EP 152 585 A) durchgeführt werden. Es sind auch die bereits dort beschriebenen Hydroxyverbindungen geeignet. Bevorzugt können als Harze eingesetzt werden Ringöffnungsprodukte epoxidierter Triglyceride mit Ethylenglykol, Propylenglykol, Propandiol, Butandiol, Hexandiol, Neopentylglykol, Trimethylolpropan, Glycerin, Trimethylolethan, Pentaerythrit und Sorbit sowie Ethergruppenhaltige Hydroxyverbindungen wie Alkylglykole oder oligomere Glykole sowie oligomere Glycerine oder Trimethylolpropane. Es kann gesagt werden, daß besonders geeignete Produkte dann entstehen, wenn die epoxidierten Fettsäuretriglyceride mit aliphatischen C₂- bis C₁₂-Alkoholen der Funktionalität 2 bis 4 umgesetzt werden und wenn das Umsetzungsverhältnis 1 : 0,1 bis 1 : 10, insbesondere 1 : 0,5 bis 1 : 4 beträgt.

Nach einer weiteren Ausführungsform der Erfindung können anstelle epoxidierter Fettsäuretriglyceride auch andere epoxidierte Fettsäureester mehrfunktioneller Alkohole eingesetzt werden. So können epoxidierte Fettsäuretrimethylolpropan-, Fettsäuremethylester,-ethylester und/oder -2-ethyl-hexylester in gleicher Weise eingesetzt werden und zu Teil- oder Vollringöffnungsprodukten mit einem der vorgenannten mehrfunktionellen oder monofunktionellen Alkohole verarbeitet werden.

Eine besonders wichtige Klasse erfindungsgemäß geeigneter Polyole für Zweikomponenten-Gießharze sind Ringöffnungs- und Umesterungsprodukte von epoxidierten Fettsäureestern monofunktioneller C₁- bis C₁₈-Alkohole, insbesondere C₁- bis C₈-Alkohole, also z.B. von epoxidierten Fettsäuremethyl-, -ethyl-, -propyl- oder -butylestern. Bevorzugt sind hier die Ringöffnungs- und Umesterungsprodukte mit Alkoholen der Funktionalität 2 bis 4, insbesondere die Umsetzungsprodukte mit Ethylenglykol, Propylenglykol, 1,2-Propandiol, 1,4-Butandiol, 1,6-Hexandiol, oligomeren Ethylenglykolen, oligomeren Propylenglykolen, die Umsetzungsprodukte mit Glycerin, Trimethylolpropan oder Pentaerythrit sowie Gemische dieser Alkohole. Die Herstellung derartiger Produkte kann nach bekannten Epoxidations- und Ringöffnungsverfahren erfolgen. Bevorzugt sind Ringöffnungs- und Umesterungsprodukte, bei denen ein Verhältnis zwischen epoxidierten Fettsäureestern und dem zur Umsetzung verwendeten Alkohol von 1 : 0,1 bis 1 : 10, insbesondere von 1 : 0,5 bis 1 : 4 angewandt worden ist. In Analogie zu den Öffnungsprodukten epoxidierter Fettalkohole sind auch hier 1:1 oder 1 : 2-Addukte herstellbar. Vorteilhafte Polyole sind die Umsetzungsprodukte von epoxidierten Fettsäuremethylestern mit aliphatischen C₂- bis C₈-Alkoholen der Funktionalität 2 bis 4.

Der Monoalkohol der Fettsäureester sollte vorzugsweise 1 bis 18, insbesondere 1 bis 8 C-Atome haben, wobei Methanol, Ethanol oder 2-Ethyl-hexanol am zweckmäßigsten sind.

Die aliphatischen oder aromatischen Alkohole haben vorzugsweise eine Funktionalität von 2 bis 4 und enthalten 1 bis 36 C-Atome, insbesondere 2 bis 12.

Unter Fettsäuren werden Carbonsäuren mit nahezu ausschließlich unverzweigten Kohlenstoffketten verstanden, insbesondere mit mehr als 8 Kohlenstoffatomen, vorzugsweise mit 12 bis 36 Kohlenstoffatomen. An einfach ungesättigten Fettsäuren seien genannt: Palmitolein-, Öl- und Eruca-Säure. Es können aber auch mehrfach ungesättigte Fettsäuren verwendet werden, z.B. Linol- und Linolen-Säure. Sie können aus Fetten und Ölen natürlichen Ursprungs erhalten werden, z.B. aus Palm-, Rüb-, Lein-, Tran-, Rizinus-, Erdnuß- und Sojabohnen-Öl und Rindertalg.

Eine bevorzugte Gruppe von Polyolen für Zweikomponenten-Gießharze im Sinne der Erfindung sind die Ringöffnungsprodukte epoxidierter Fettsäureester mit aliphatischen Alkoholen der Funktionalität 2 bis 10. Eine besonders wichtige Untergruppe dieser Verbindungen sind die Ringöffnungsprodukte epoxidierter Fettsäureester, bei denen die Ringöffnung unter Erhalt der Esterbindung ausgeführt worden ist.

Die erfindungsgemäßen Polyole sind Ringöffnungs- und Umesterungsprodukte von epoxidierten Fettsäureestern monofunktioneller C₁- bis C₁₈, insbesondere C₁- bis C₈-Alkohole, also z.B. von epoxidierten Fettsäuremethyl-, -ethyl-, -propyl- oder -butylestern. Bevorzugt sind hier die Ringöffnungs und Umesterungsprodukte mit Alkoholen der Funktionalität 2 bis 4, insbesondere die Umsetzungsprodukte mit Ethylenglykol, Propylenglykol, 1,4-Butandiol, 1,6-Hexandiol, oligomeren Ethylenglykolen, oligomeren Propylenglykolen, die Umsetzungsprodukte mit Glycerin, Trimethylolpropan und/oder Pentaerythrit. Die Herstellung derartiger Produkte kann nach bekannten Epoxidations- und Ringöffnungsverfahren erfolgen. Bevorzugt sind Ringöffnungs- und Umesterungsprodukte, bei denen ein Verhältnis zwischen epoxidierten Fettsäureester und dem zur Umsetzung verwendeten Alkohol von 1 : 0,5 bis 1 : 5 angewandt worden ist. In Analogie zu den Öffnungsprodukten epoxidierter Fettalkohole sind auch hier 1 : 1 oder 1 : 2-Addukte herstellbar. Vorteilhafte Polyole sind die Umsetzungsprodukte von epoxidiertem Fettsäuremethylester mit aliphatischen C₂- bis C₈-Alkoholen der Funktionalität 2 bis 4.

Alle bisher erwähnten, als Polyol verwendbaren Alkoholgemische können weiterhin noch einer Kettenverlängerungsreaktion unterzogen werden. Zu diesem Zweck werden sie unter an sich bekannten Bedingungen mit C₂- bis C₄-Epoxiden umgesetzt. Bevorzugt ist hier die Umsetzung mit Ethylenoxid. Die Alkoholgemische können pro Mol OH-Gruppen mit 1 bis 40 Mol Ethylenoxid umgesetzt werden. Bevorzugt ist die Umsetzung mit 5 bis 20 Mol und insbesondere mit 10 bis 15 Mol Ethylenoxid. Außer mit Ethylenoxid kann auch mit Propylenoxid umgesetzt werden, wobei pro Mol OH-Gruzppe bis zu 40 Mol, vorzugsweise jedoch 5 bis 20 Mol Propylenoxid eingesetzt werden. Weiterhin kann mit anderen kurzkettigen Epoxiden, etwa mit Glycidol, umgesetzt werden. Schließlich ist Butenoxid ein geeignetes Umsetzungsmittel. Die Umsetzung mit Ethylenoxid und/oder mit Glycidol führt zu einer Hydrophilierung der Härter, was für manchen Einsatzzweck gewünscht wird.

Die Isocyanat-Komponente der erfindungsgemäßen Gießharze ist eine Isocyanatverbindung der Funktionalität 2 bis 4. Geeignet sind hier sowohl aromatische als auch aliphatische, monocyclische wie polycylische, mehrfunktionelle Isocyanatverbindungen. So kann nach einer ersten Ausführungsform als aromatische Isocyanatverbindung Toluylendiisocyanat oder Diphenylmethandiisocyanat eingesetzt werden. Besonders geeignet ist technisches Diphenylmethandiisocyanat mit einem Gehalt an höherfunktionellen Diisocyanaten und einer Funktionalität an Isocyanatgruppen größer als 2. Ein weiteres geeignetes aromatisches Diisocyanat ist Xylylendiisocyanat. Darüber hinaus kann eine Vielzahl aliphatischer Isocyanate der Funktionalität 2 und höher eingesetzt werden. Beispiele sind hier Isophorrondiisocyanat, tris(6-Isocyanatohexyl)isocyanurat und Dicyclohexylmethandiisocyanat als cyclische aliphatische Diisocyanate. Weitere Beispiele sind aliphatische, geradkettige Diisocyanate, wie sie durch Phosgenisierung von Diaminen gewonnen werden, zum Beispiel Tetramethylendiisocyanat oder Hexamethylendiisocyanat.

Als Isocyanat-Komponente in den erfindungsgemäßen Zweikomponenten-Gießharze können außer den mehrfunktionellen IsocyanatVerbindungen an sich auch Prepolymere eingesetzt werden. Unter Prepolymeren werden hier die Addukte mehrfunktioneller Isocyanate an mehrfunktionelle Alkohole, etwa die Umsetzungsprodukte eines der vorgenannten aromatischen oder aliphatischen Diisocyanate mit Ethylenglykol, Propylenglykol, Glycerin, Trimethylolpropan oder Pentaerythrit verstanden. Auch Umstzungsprodukte von Diisocyanaten mit Polyetherpolyolen, zum Beispiel Polyetherpolyolen auf Basis Polyethylenoxid oder auf Basis Polypropylenoxid können als Prepolymere verwendet werden. Aber auch cyclische Prepolymere aus Diisocyanaten sind brauchbar, z.B. Isocyanurate.

Die Zweikomponenten-Gießharze und Beschichtungsmassen können weiterhin verschiedene Hilfsstoffe enthalten, die vorzugsweise dem Polyol zugemischt werden. Verwendet werden können hier zum Beispiel Füllstoffe. Als Füllstoffe geeignet sind gegenüber Isocyanaten nicht reaktive, anorganische Verbindungen wie zum Beispiel Kreide oder Gips, gefällte Kieselsäuren, Zeolithe, Bentonite, gemahlene Mineralien sowie andere, dem auf dem Arbeitsgebiet tätigen Fachmann bekannte anorganische Füllstoffe. Weiterhin können auch organische Füllstoffe verwendet werden, insbesondere Faserkurzschnitte und anderes. Bevorzugt sind Füllstoffe, die den Gießharzen Thixotropie verleihen.

Die erfindungsgemäßen Zweikomponenten-Gießharze bzw. Beschichtungsmassen können weiterhin Beschleuniger enthalten. Geeignet sind zum Beispiel tertiäre Basen wie Bis-(N,N-dimethylamino)-diethylether, Dimethylaminocyclohexan, N,N-Dimethyl-benzylamin, N-Methylmorpholin sowie die Umsetzungsprodukte von Dialkyl-(β-hydroxyethyl)-amin mit Monoisocyanaten und Veresterungsprodukte von Dialkyl-(β-hydroxyethyl)-amin und Dicarbonsäuren. Ein weiterer wichtiger Beschleuniger ist das 1,4-Diamino-bicyclo-(2.2.2)-octan. Ferner können nichtbasische Substanzen als Beschleuniger verwendet werden. Hier seien Metallverbindungen genannt, beispielsweise Eisenpentacarbonyl, Nickeltetracarbonyl, Eisenacetylacetonat sowie Zinn-(II)-(2-ethylhexoat), Dibutylzinndilaurat oder Molybdänglykolat.

Außer den genannten Verbindungen können die Gießharze bzw. Beschichtungsmassen noch weitere Hilfsstoffe enthalten. Zu erwähnen sind hier Lösungsmittel. Geeignet sind Lösungsmittel, die ihrerseits nicht mit Isocyanatgruppen reagieren, wie zum Beispiel halogenierte Kohlenwasserstoffe, Ester, Ketone, aromatische Kohlenwasserstoffe und andere. Weiterhin können Weichmacher, Flammschutzmittel, Verzögerer, Farbstoffe, übliche Füllstoffe und Alterungsschutzmittel, wie sie in entsprechenden Gießharzen bekannt sind, miteingearbeitet werden.

Die erfindungsgemäß verwendeten Polyole können durch andere Polyole in einem Ausmaß von bis zu 80 % ersetzt werden. Bevorzugt werden sie jedoch unvermischt eingesetzt.

Die Isocyanat-Gießharze bzw. Beschichtungsmassen werden bis zu ihrer Anwendung zweikomponentig gelagert, daß heißt bis zu diesem Zeitpunkt werden Polyol und Isocyanatverbindung getrennt aufbewahrt. Zur Anwendung werden diese beiden Verbindungen miteinander vermischt und das Gemisch auf die zu beschichtenden Substrate aufgetragen. Bezüglich des Mischungsverhältnisses und von Maßnahmen zur Beeinflussung der Topfzeit sie auf das allgemeine Fachwissen des Fachmanns verwiesen. Dies ist beispielsweise in der Monographie von Saunders und Frisch "Polyurethanes, Chemistry and Technology", Band XVI der Serie High Polymers "Interscience Publishers" New York - London, Teil I (1962) und Teil II (1964) dokumentiert. Um das richtige Mischungsverhältnis zu finden, wird der Fachmann im allgemeinen eine Äquivalenz an Isocyanat und OH-Gruppen anstreben. Dazu kann in Vorversuchen die OH-Zahl der Alkoholgemische und die Isocyanatzahl der Isocyanatverbindungen bestimmt werden, aus denen sich dann die Anzahl der Mole reaktiver Gruppen pro Gramm errechnen läßt. Besonders geeignete erfindungsgemäße Polyole weisen OH-Zahlen zwischen 120 und 400, vorzugsweise zwischen 150 und 380 auf. Je nach chemischer Struktur sind jedoch auch Verbindungen mit geringerer oder höherer OH-Zahl, etwa mit OH-Zahlen zwischen 60 und 120 oder zwischen 240 und 500 geeignet, sofern ihre Funktionalität nicht unter zwei OH-Gruppen pro Molekül liegt.

Die erfindungsgemäß hergestellten Gießharze bzw. Beschichtungsmassen sind gegenüber Feuchtigkeit und sogar gegenüber Wasser weitgehend inert. So ist es möglich, sie für feuchte Untergründe aus z.B. Holz oder Textilien zu verwenden. Darüber hinaus sind sie zusätzlich beständig gegen aggressive Medien wie Salzlösungen, anorganische oder organische Säuren - z.B. Essigsäure -, Laugen, organische Lösungsmittel und Esteröle auf organischer Basis, z.B. synthetische Ester wie Rapsölmethylester und Schmierstoffester. Daher eignen sich die Harze und die Massen zur Verwendung in der chemischen Industrie, in der Elektro- und MineralölIndustrie und z.B. in Bädern, beim Modellbau sowie bei Fassaden, insbesondere bei der Betonsanierung und Lackierung sowie zum Korrosionsschutz. Es können zähharte, schlagfeste, flexible Beschichtungen hergestellt werden. Die ausgehärteten kompakten Polyurethane sind schließlich auch noch transparent.

Die Erfindung wird anhand von nachfolgenden Beispielen im einzelnen erläutert:

### A: Herstellung von Diolen

### Beispiel 1:

### Ringöffnung von Epoxystearinsäuremethylester (technisch) mit Ethylenglykol

100 kg Epoxystearinsäuremethylester mit einem Epoxidsauerstoffgehalt (EP.-0) in Gewichtsprozent von 4,95 und 38,3 kg Ethylenglykol wurden in Gegenwart von 34 g konzentrierter Schwefelsäure unter Rühren auf 90 °C erhitzt. Die anfangs exotherme Reaktion war nach 1,5 Stunden beendet (Ep.-0 = 0,03 %). Die Katalysatorsäure wurde mit 160 g 30 %iger methanolischer Natriummethylatlösung neutralisiert und das Rohprodukt im Vakuum bis 200 °C andestilliert (27,7 kg Destillat). Man erhielt so eine gelbe, klare Flüssigkeit mit folgenden Eigenschaften: OH-Zahl (OHZ) = 234,6, Verseifungszahl (VZ) = 162,06, Jod-Zahl (JZ) = 6,9 und Säure-Zahl (SZ) = 0,7.

### Beispiel 2:

### Ringöffnung von Epoxystearinsäuremethylester (technisch) mit 1,2-Propandiol

883 g Epoxystearinsäuremethylester (Ep.-0 = 4,71 %) und 396 g 1,2-Propandiol wurden in Gegenwart von 0,8 g konzentrierter Schwefelsäure unter Rühren auf 90 °C erhitzt. Die anfangs exotherme Reaktion war nach 2,5 Stunden beendet (Ep.-0 = 0,03 %). Die Katalysatorsäure wurde mit 3,5 g 30 %iger methanolischer Natriummethylatlösung neutralisiert und das Rohprodukt im Vakuum bis 210 °C andestilliert (579 g Destillat). Man erhielt so eine gelbe, klare Flüssigkeit (VZ = 147 JZ = 11, SZ = 0,4).

### Beispiel 3:

### Ringöffnung von Epoxystearinsäuremethylester (technisch) mit 1,4-Butandiol

1019 g Epoxystearinsäuremethylester (Ep.-0 = 4,71 %) und 541 g 1,4-Butandiol wurden in Gegenwart von 0,45 g konzentrierter Schwefelsäure unter Rühren auf 110 °C erhitzt. Die anfangs exotherme Reaktion war nach 1 Stunde beendet (Ep.-0 = 0,03 %). Die Katalysatorsäure wurde mit 1 g Diethylethanolamin neutralisiert und das Rohprodukt im Vakuum bis 200 °C andestilliert (271 g Destillat). Man erhielt so eine gelbe Flüssigkeit (OHZ = 190, VZ = 160, SZ = 1,9).

### Beispiel 4:

### Ringöffnung von Epoxystearinsäuremethylester (technisch) mit Glycerin

552 g (6 Mol) Glycerin, 1019 g (3 Mol) Epoxystearinsäuremethylester und 2,1 g Schwefelsäure wurden in einem Rührkessel vorgelegt und unter Rühren auf ca. 100°C erhitzt. Nach beendeter Reaktion (Epoxidwert < 0,1 %, Reaktionszeit ca. 2 h), Neutralisation mit 7 g Diethylethanolamin und Phasenseparation wurde das überschüssige Glycerin abgetrennt. Man erhielt 1257 g einer gelben, leicht trüben Flüssigkeit (OHZ = 334, SZ = 0,3).

### Beispiel 5:

### Ringöffnung von Epoxystearinsäuremethylester (technisch) mit Trimethylolpropan

Analog Beispiel 1 wurden 680 g Epoxystearinsäuremethylester und 805 g Trimethylolpropan in Gegenwart von 0,4 g konzentrierter Schwefelsäure umgesetzt. Nach Neutralisation mit Diethylethanolamin wurde das Produkt in Volumen bis 200 °C abdestilliert.
Ausbeute: 610 g, OHZ = 324, SZ = 1,0, VZ = 129.

### B: Herstellung und Eigenschaften des Polyurethans

Aus den Polyolen und Desmodur VKS (Isocyanat der Fa. Bayer) wurden PUR-Prüfkörper (Durchmesser 5 cm) hergestellt, danach 24 h bei Raumtemperatur (ca. 23 °C) und 2 d bei 80 °C ausgehärtet.

| | | |
|---|---|---|
| Rezeptur | 20 g | Polyol Desmodur VKS® (entsprechend der 0HZ der Polyolmischung) |
| | 0,03 g | Fomrez VL 24 |

Zur Bestimmung der Hydrolystabilität wurden die Prüfkörper bei 80 °C in 20%iger Kalilauge gelagert und in Abständen die Masse und/oder die Shore-Härte bestimmt.
1. Bestimmung der Hydrophobie
Je 100 g PUR-Masse wurde unter Wasser ausgehärtet und die entstehende Kohlendioxidmenge bestimmt:

| Verbindung aus | ml Kohlendioxid |
|---|---|
| Beispiel 1 | 60 |
| Beispiel 2 | 64 |
| Beispiel 3 | 45 |
| Beispiel 4 | 87 |

| Vergleichsbeispiel | |
|---|---|
| Ricinusöl | 77 |
| Ricinusöl + TMP-5 PO (1 : 1) | 205 |

2. Beständigkeit der PUR-Massen aus Polyol und Desmodur VKS in 20 %iger Kalilauge bei 80 °C,
a) Shore Härte D der ausgehärteten PUR-Massen in Abhängigkeit von der Zeit.

| Polyol | Zeit[Tage] | | | | |
|---|---|---|---|---|---|
| | 0 | 1 | 4 | 6 | 14 |
| Beispiel 1 | 89A | 86A | 84A | 92A | 88A |
| Beispiel 4 | 73D | 75D | 75D | 77D | 79D |
| Ricinusöl | 66A | 62A | 62A | stark angegriffen | |

b) Gewichtsverlust in Abhängigkeit von der Zeit (Gewicht in g)

| Polyol | Zeit[Tage] | | | | |
|---|---|---|---|---|---|
| | 0 | 1 | 4 | 7 | 14 |
| Beispiel 4 | 14,9 | 14,9 | 14,6 | 14,3 | nicht bestimmt |
| Beispiel 5 | 15,0 | 15,1 | 15,0 | 15,0 | 14,8 |
| Ricinusöl | 14,9 | 14,9 | 14,8 | aufgelöst | |

3. Beständigkeit der PUR-Massen aus Polyol und Desmodur VKS in Butylacetat 20 °C
a) Shore Härte D in Abhängigkeit von der Zeit

| Polyol | Zeit[Tage] | | | | |
|---|---|---|---|---|---|
| | 0 | 1 | 4 | 7 | 14 |
| Beispiel 4 | 72 | 62 | 54 | 49 | 46 |
| Beispiel 5 | 78 | 67 | 59 | 56 | 56 |
| Ricinusöl | 70A | zerfallen | | | |

b) Gewichtsverlust in Abhängigkeit von der Zeit (Gewicht in g)

| Polyol | Zeit[Tage] | | | | |
|---|---|---|---|---|---|
| | 0 | 1 | 4 | 7 | 14 |
| Beispiel 4 | 15,3 | 15,6 | 16,3 | 16,8 | nicht bestimmt |
| Beispiel 5 | 13,9 | 14,1 | 14,4 | 14,7 | 15,1 |
| Ricinusöl | 15,0 | zerfallen | | | |

4. Beständigkeit der PUR-Massen aus Polyol und Desmodur VKS in Xylol bei 20 °C
a) Shore Härte D in Abhängigkeit von der Zeit

| Polyol | Zeit[Tage] | | | | |
|---|---|---|---|---|---|
| | 0 | 1 | 4 | 7 | 14 |
| Beispiel 4 | 72 | 70 | 67 | 62 | 63 |
| Beispiel 5 | 78 | 79 | 76 | 74 | 68 |

b) Gewichtsverlust in Abhängigkeit von der Zeit (Gewicht in g)

| Polyol | Zeit[Tage] | | | | |
|---|---|---|---|---|---|
| | 0 | 1 | 4 | 7 | 14 |
| Beispiel 4 | 15,0 | 15,1 | 15,4 | 15,6 | 15,8 |
| Beispiel 5 | 15,1 | 15,1 | 15,2 | 15,2 | 15,3 |

Die Beispiele zeigen, daß durch Verwendung von Ringöffnungsprodukten epoxidierter Fettsäureester mit Alkoholen als Polyolkomponente PUR-Gießharze hergestellt werden können, die auch unter Wasser fast blasenfrei aushärten. AuBerdem werden die Gießharze beständiger gegenüber Lösungsmittel oder Hydrolyse. Schließlich ist die Verträglichkeit mit dem MDI besser.
Von besonderer Bedeutung ist es auch, daß alle PUR-Massen mit Polyolen der Beispiele 1 bis 5 transparent sind, d.h. sie sind frei von Trübungen und klar durchsichtig. PUR-Massen mit Ricinusöl sind dagegen trüb aufgrund der Unverträglichkeit mit dem Isocyanat MDI.

### Erläuterungen

MDI = Methandiphenyldiisocyanat
TMP - 5 PO = Trimethylolpropan + 5 Propylenoxid
Desmodur VKS® = MDI der Fa. Bayer AG

## Patentansprüche

1. Verwendung eines Polyols mit mehr als 10 C-Atomen und 2 oder mehr Hydroxylgruppen, welches durch Umsetzung von epoxidierten Talgfettsäureestern einwertiger Alkohole mit aliphatischen oder aromatischen Alkoholen der Funktionalität 2 bis 10 und/oder mit di- oder trifunktionellen Phenolen unter Epoxidringöffnung und gewünschtenfalls Umesterung der Fettsäureester und/oder nachfolgender Reaktion mit C₂- bis C₄-Epoxiden hergestellt worden ist, für ein Isocyanat-Gießharz und Beschichtungsmassen.

2. Verwendung nach Anspruch 1, dadurch gekennzeichnet, daß das Polyol ein Umsetzungsprodukt von epoxidierten Talgfettsäureestern mit aliphatischen C₂ bis C₁₂-Alkoholen der Funktionalität 2 bis 4, im Molverhältnis 1 : 0,1 bis 1 : 10 darstellt.

3. Verwendung nach Anspruch 2, dadurch gekennzeichnet, daß das Polyol ein Ringöffnungs- und/oder Umesterungsprodukt epoxidierter Talgfettsäureester von monofunktionellen C₁- bis C₁₈-Alkoholen mit aliphatischen C₂ bis C₈-Alkoholen der Funktionalität 2 bis 4 darstellt.

4. Verwendung nach mindestens einem der Ansprüche 1 bis 3, dadurch gekennzeichnet, daß das Polyol ein Alkoholgemisch aus wasserfreien Polyolen mit mehr als 10 C-Atomen und 2 oder mehr Hydroxylgruppen darstellt, welches durch Umsetzung von epoxidierten Talgfettsäureestern mit aliphatischen C₂- bis C₁₂-Alkoholen der Funktionalität 2 bis 4 unter Epoxidringöffnung und anschließender Reaktion mit Ethylenoxid und/oder Propylenoxid im Molverhältnis 1 : 5 bis 1 : 40, bezogen auf OH-Gruppen, hergestellt worden ist.

5. Verwendung nach mindestens einem der Ansprüche 1 bis 4, dadurch gekennzeichnet, daß es sich bei der Isocyanat-Komponente um aromatische Diisocyanate handelt.

6. Verwendung nach mindestens einem der Ansprüche 1 bis 4, dadurch gekennzeichnet, daß es sich bei der Isocyanat-Komponente um aliphatische Diisocyanate handelt.

7. Verwendung nach mindestens einem der Ansprüche 1 bis 4, dadurch gekennzeichnet, daß es sich bei der Isocyanat-Komponente um Polyurethanprepolymere mit im Mittel 2 oder mehr Isocyanatgruppen pro Molekül handelt.

8. Verwendung nach mindestens einem der Ansprüche 1 bis 7, dadurch gekennzeichnet, daß das Gießharz bzw. die Beschichtungsmasse eine der Komponenten: Beschleuniger, Stabilisatoren, gegenüber Isocyanatgruppen nicht reaktive Lösungsmittel und/oder Verzögerer enthält.

9. Verwendung nach mindestens einem der Ansprüche 1 bis 8, dadurch gekennzeichnet, daß das Gießharz bzw. die Beschichtungsmasse übliche Füllstoffe enthält.

10. Verwendung nach mindestens einem der Ansprüche 1 bis 9 zum Vergießen bzw. Beschichten und nachfolgendem Aushärten im direktem Kontakt zu flüssigem Wasser.

11. Verwendung nach mindestens einem der Ansprüche 1 bis 8 zur Herstellung von transparenten Vergußteilen, Lacken oder Beschichtungen.

12. Verwendung der Polyurethanmassen mit den Polyolen gemäß mindestens einem der Ansprüche 1 bis 9 in Gegenwart von anorganischen oder organischen Säuren oder in Gegenwart von wäßrigen Laugen oder organischen Lösungsmitteln.

## Claims

1. The use of a polyol containing more than 10 carbon atoms and 2 or more hydroxyl groups, which has been obtained by the ring-opening reaction of epoxidized tallow fatty acid esters of monofunctional alcohols with aliphatic or aromatic alcohols having a functionality of 2 to 10 and/or with difunctional or trifunctional phenols and, if desired, transesterification of the fatty acid esters and/or subsequent reaction with C₂₋₄ epoxides, for an isocyanate casting resin and coating compositions.

2. The use claimed in claim 1, characterized in that the polyol is a reaction product of epoxidized tallow fatty acid esters with aliphatic C₂₋₁₂ alcohols having a functionality of 2 to 4 in a molar ratio of 1:0.1 to 1:10.

3. The use claimed in claim 2, characterized in that the polyol is a ring opening and/or transesterification product of epoxidized tallow fatty acid esters of monofunctional C₁₋₁₈ alcohols with aliphatic C₂₋₈ alcohols having a functionality of 2 to 4.

4. The use claimed in at least one of claims 1 to 3, characterized in that the polyol is an alcohol mixture of water-free polyols containing more than 10 carbon atoms and 2 or more hydroxyl groups which has been obtained by ring opening of epoxidized tallow fatty acid esters with aliphatic C₂₋₁₂ alcohols having a functionality of 2 to 4 and subsequent reaction with ethylene oxide and/or propylene oxide in a molar ratio of 1:5 to 1:40, based on OH groups.

5. The use claimed in at least one of claims 1 to 4, characterized in that the isocyanate component is an aromatic diisocyanate.

6. The use claimed in at least one of claims 1 to 4, characterized in that the isocyanate component is an aliphatic diisocyanate.

7. The use claimed in at least one of claims 1 to 4, characterized in that the isocyanate component is a polyurethane prepolymer containing an average of two or more isocyanate groups per molecule.

8. The use claimed in at least one of claims 1 to 7, characterized in that the casting resin or the coating composition contains one of the following components: accelerators, stabilizers, non-isocyanate-reactive solvents and/or retarders.

9. The use claimed in at least one of claims 1 to 8, characterized in that the casting resin or the coating composition contains typical fillers.

10. The use claimed in at least one of claims 1 to 9 for encapsulation or coating and subsequent curing in direct contact with liquid water.

11. The use claimed in at least one of claims 1 to 8 for the production of transparent encapsulations, lacquers or coatings.

12. The use of the polyurethane compounds containing the polyols claimed in at least one of claims 1 to 9 in the presence of inorganic or organic acids or in the presence of aqueous alkalis or organic solvents.

## Revendications

1. Utilisation d'un polyol ayant plus de 10 atomes de carbone et 2 ou plus groupes hydroxyle qui a été produit par réaction d'esters d'acide gras de suif époxydés et d'alcools univalents, avec des alcools aliphatiques ou aromatiques de fonctionnalité 2 à 10 et/ou avec des phénols di- ou trifonctionnels avec ouverture du cycle époxyde et le cas échéant transestérification de l'ester d'acide gras et/ou réaction subséquente avec des époxydes en C₂ à C₄, pour une résine de coulée à base d'isocyanate et pour des masses de revêtement.

2. Utilisation selon la revendication 1,
caractérisée en ce que
le polyol représente un produit de réaction d'esters, d'acides gras de suif époxydés avec des alcools aliphatiques en C₂ à C₁₂ de fonctionnalité 2 à 4 dans un rapport molaire de 1 : 0,1 à 1 : 10.

3. Utilisation selon la revendication 2,
caractérisée en ce que
le polyol représente un produit d'ouverture de cycle et/ou un produit de transestérification d'esters d'acide gras de suif époxydés et d'alcools monofonctionnels en C₁ à C₁₈, avec des alcools aliphatiques en C₂ a C₈ de fonctionnalité 2 à 4.

4. Utilisation selon au moins l'une des revendications 1 à 3,
caractérisée en ce que
le polyol représente un mélange d'alcools à base de polyols anhydres ayant plus de 10 atomes de carbone et 2 ou plus groupes hydroxyle, qui a été préparé par réaction d'esters d'acide gras de suif époxydés avec des alcools aliphatiques en C₂ à C₁₂ de fonctionnalité 2 à 4, avec ouverture du cycle époxyde et réaction consécutive avec l'oxyde d'éthylène et/ou l'oxyde de propylène dans un rapport molaire de 1 : 5 à 1 : 40, rapporté aux groupes OH.

5. Utilisation selon au moins l'une des revendications 1 à 4,
caractérisée en ce que
pour le composant isocyanate, il s'agit d'un diisocyanate aromatique.

6. Utilisation selon au moins l'une des revendications 1 à 4,
caractérisée en ce que
pour le composant isocyanate il s'agit d'un diisocyanate aliphatique.

7. Utilisation selon au moins l'une des revendications 1 à 4,
caractérisée en ce que
pour le composant isocyanate il s'agit de prépolymères de polyuréthanne avec en moyenne 2 ou plus groupes isocyanate par molécule.

8. Utilisation selon au moins l'une des revendications 1 à 7,
caractérisée en ce que
la résine de coulée ou la masse de revêtement renferme un des composants : accélérateurs, stabilisants, solvants non réactifs vis-à-vis des groupes isocyanate et/ou retardateurs.

9. Utilisation selon au moins l'une des revendications 1 à 8,
caractérisée en ce que
la résine de coulée ou la masse de revêtement contient des substances de charge habituelles.

10. Utilisation selon au moins l'une des revendications 1 à 9, pour la coulée ou le revêtement et durcissement subséquent dans le contact direct à l'eau liquide.

11. Utilisation selon au moins l'une des revendications 1 à 8, en vue de l'obtention de pièces de coulée, de laques ou de revêtements transparents.

12. Utilisation des masses de polyuréthanne avec des polyols selon au moins une des revendications 1 à 9 en présence d'acides organiques ou minéraux ou en présence de lessives alcalines aqueuses ou de solvants organiques.
